# EUROPEAN PATENT APPLICATION

(11) **EP 4 769 853 A1**
(43) Date of publication of application: **01.07.2026**
(21) Application number: 25211872.4
(22) Date of filing: 29.10.2025
(51) Int. Cl.: H02B 1/015, H02B 1/04

(54) **GRID-CONNECTED DISTRIBUTION BOX**

(30) Priority: 24.12.2024 KR 20240195057
(71) Applicant: Hanwha Solutions Corporation, Jung-gu Seoul 04541 (KR)
(72) Inventor: SEO, Seong Won, 04541 Seoul (KR); HAM, Joung Hee, 04541 Seoul (KR); KIM, Kyoung Hwan, 04541 Seoul (KR)
(74) Representative: Mooser, Sebastian Thomas

(57) **Abstract**

Provided is a grid-connected distribution box (1) including a case (10) having an internal space, a first terminal block module (300) disposed in the internal space and having a control board (310) configured to control power distribution and a sub-input terminal (330) connected to at least one sub-power supply (E1), and a second terminal block module (400) disposed to partially overlap the first terminal block module (300) and having a neutral input terminal (410) connected to a neutral line.

## Description

### BACKGROUND

### 1. Field

The present disclosure relates to a grid-connected distribution box having a terminal block structure.

### 2. Description of the Related Art

As a distribution box is recognized as an electrical device for branching and distributing power to a plurality of power consumers, the distribution box traditionally includes a metal enclosure, a main circuit breaker connected to a power grid, a plurality of branch circuit breakers, and a busbar connecting these components.

Recent distribution boxes have evolved beyond simple power distribution functions and are implementing various intelligent functions according to the purpose thereof. For example, there are grid-connected distribution boxes that are connected to a plurality of power grids to mutually interchange power.

However, constituent parts of distribution boxes of a related art have been assembled in the order of a production process and all terminals have been disposed to be coplanar with each other, and thus a working position is deeply placed during wiring work, and the terminals are difficult to distinguish, which has caused disadvantages in that there is a significant burden of human error, a non-utilizable space is generated inside an enclosure to reduce space utilization, and the size of the enclosure is increased.

### SUMMARY

The present disclosure is directed to providing a distribution box in which space utilization is improved, and ease of work is improved.

An aspect of the present disclosure provides a grid-connected distribution box including a case having an internal space, a first terminal block module disposed in the internal space and having a control board configured to control power distribution and a sub-input terminal connected to at least one sub-power supply, and a second terminal block module disposed to partially overlap the first terminal block module and having a neutral terminal connected to a neutral line.

In some embodiments, a portion of the second terminal block module may be inserted into a cut-out portion of the first terminal block module.

In some embodiments, the sub-input terminal and the neutral terminal may be positioned at different levels and may be disposed to at least partially overlap each other in a height direction.

In some embodiments, the first terminal block module may include a first plate on which the control board is disposed, and a first step protruding from one side of the first plate in a height direction and having an upper surface on which at least one sub-input terminal is disposed.

In some embodiments, the grid-connected distribution box may further include a sub-input tab which has one end portion disposed on the first plate and another end portion disposed on the first step to connect the control board to the at least one sub-input terminal.

In some embodiments, the at least one sub-input tab may be bent to correspond to a step difference between the first plate and the first step.

In some embodiments, a first sub-input terminal to which power of a first sub-power supply is input and a second sub-input terminal to which power of a second sub-power supply is input may be disposed on the first step.

In some embodiments, the first step may include a protruding block protruding between the first sub-input terminal and the second sub-input terminal.

In some embodiments, the second terminal block module may include a second plate inserted into a lower space of a first step of the first terminal block module, and a second step which protrudes from the second plate in a height direction and is disposed to face the first step and on which a current sensor is disposed.

In some embodiments, the grid-connected distribution box may further include a neutral terminal mount, on which the neutral terminal is mounted, at one side of the second plate.

In some embodiments, a width of the neutral terminal mount may be less than a width of the second step.

In some embodiments, a portion of the neutral terminal mount may be disposed below the first step of the first terminal block module, and another portion of the neutral terminal mount may be disposed such that an input terminal of the neutral terminal is exposed.

In some embodiments, the current sensor may be disposed to face the at least one sub-input terminal.

In some embodiments, the grid-connected distribution box may further include a grid module disposed in the internal space and having a main input terminal to which main power is input, and at least one output terminal connected to at least one load, and a relay module disposed at one side of the grid module.

In some embodiments, the grid module may include a main terminal mount on which the main input terminal is mounted, a first output terminal mount which is disposed below the main terminal mount and on which a first output terminal connected to a first load is mounted, and a second output terminal mount which is disposed below the first output terminal mount and on which a second output terminal connected to a second load is mounted.

In some embodiments, the grid module may further include a first connector disposed on the first output terminal mount so that one end portion thereof is connected to the first output terminal, and a second connector disposed on the second output terminal mount so that one end portion thereof is connected to the second output terminal.

In some embodiments, the first connector and the second connector may have different lengths.

In some embodiments, at least one of the first output terminal mount and the second output terminal mount may have an opening into which the first connector or the second connector is inserted and which is perforated in a longitudinal direction.

In some embodiments, the grid module further may include a relay mount on which the relay module is mounted and which protrudes from a surface of the second output terminal mount.

In some embodiments, the grid-connected distribution box may further include a transformer disposed in the internal space of the case, and a heat dissipation structure formed on a surface of the case facing the transformer.

### BRIEF DESCRIPTION OF THE DRAWINGS

The above and other aspects, features, and advantages of certain embodiments of the disclosure will be more apparent from the following description taken in conjunction with the accompanying drawings in which:
FIG. 1 is a schematic block diagram illustrating a grid-connected distribution box having a terminal block structure according to an embodiment of the present disclosure;
FIG. 2 is a perspective view illustrating an embodiment of the grid-connected distribution box;
FIG. 3 is an exploded perspective view of a part of the grid-connected distribution box of FIG. 2;
FIG. 4 is a view illustrating a grid module and a relay module of FIG. 3;
FIG. 5 is a cross-sectional view taken along line V-V' of FIG. 3 when the grid module and the relay module are assembled;
FIG. 6 is a view illustrating a first terminal block module of FIG. 3;
FIG. 7 is a view illustrating a second terminal block module of FIG. 3;
FIG. 8 is a view illustrating a state in which the first terminal block module and the second terminal block module are assembled;
FIG. 9 is a view illustrating the first terminal block module and the second terminal block module of FIG. 8 viewed from above.
FIG. 10 is a view illustrating a cross section taken based on a mounting portion of a first sub-input terminal of the first terminal block module and a first current sensor of the second terminal block module of FIG. 8; and
FIG. 11 is a schematic diagram illustrating a circuit of the grid-connected distribution box of FIG. 2.

### DETAILED DESCRIPTION

Since the present disclosure may apply various transformations and have various embodiments, specific embodiments will be illustrated in the drawings and described in detail in the detailed description. Effects and features of the present disclosure, and methods for achieving them will become clear with reference to the embodiments described below in detail together with the drawings. However, the present disclosure is not limited to the embodiments disclosed below and may be implemented in various forms.

Hereinafter, embodiments of the present disclosure will be described in detail with reference to the attached drawings. When describing with reference to the drawings, identical or corresponding components are given the same drawing reference numerals and redundant descriptions thereof are omitted.

In the following embodiments, the terms first, second, and the like do not have limited meaning but are used for the purpose of distinguishing one component from another component.

In the following embodiments, the expressions used in the singular such as "a," "an," and "the" are intended to include the plural forms as well, unless the context clearly indicates otherwise.

In the following embodiments, it will be understood that the terms such as "including," "comprising," and "having" specify the presence of stated features or components, but do not preclude the presence or addition of one or more other features or components.

In the following embodiments, when an area, a component, or the like is positioned on or above another part, the present disclosure includes not only a case in which the area, the component, or the like is positioned directly above the other part, but also a case in which other areas, other components, or the like may be positioned therebetween.

In the drawings, components may be exaggerated or reduced in size for convenience of description. For example, the size and thickness of each component shown in the drawing are arbitrarily shown for convenience of description, and thus the present disclosure is not necessarily limited to what is shown.

In the following embodiments, it will be understood that when an area, a component, or the like is referred to as being connected to another component, it may be directly connected to the other component or intervening components may also be present.

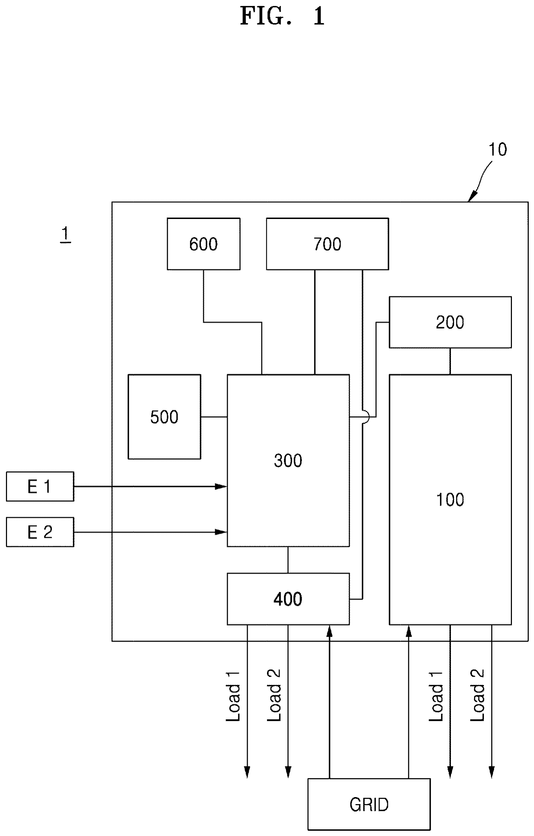

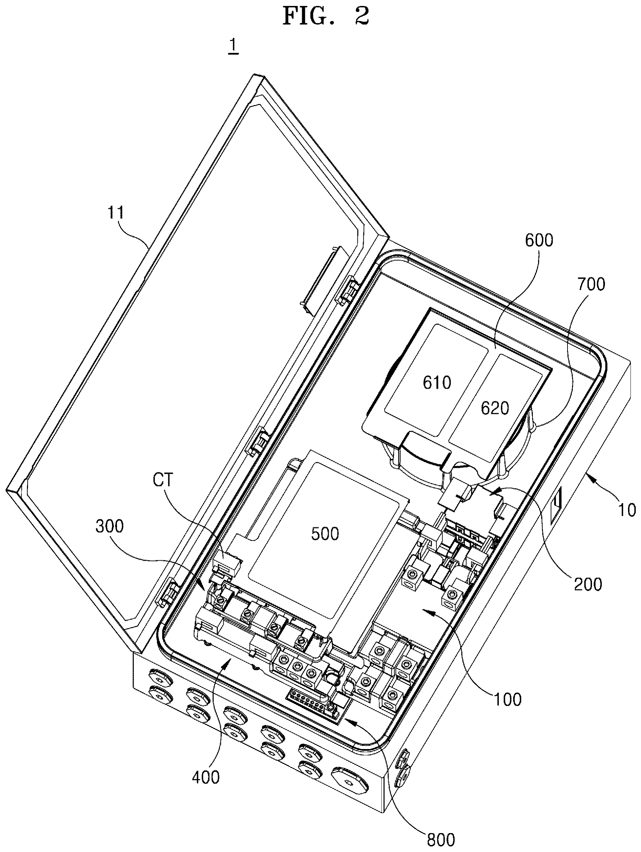

FIG. 1 is a schematic block diagram illustrating a grid-connected distribution box 1 having a terminal block structure according to an embodiment of the present disclosure. FIG. 2 is a perspective view illustrating an embodiment of the grid-connected distribution box 1.

Referring to FIG. 1, the grid-connected distribution box 1 may be electrically connected to a main power supply GRID, one or more sub-power supplies E1 and E2, and a plurality of loads Load 1 and Load 2, and may control power flow. The grid-connected distribution box 1 may distribute power input from the main power supply GRID or the sub-power supplies E1 and E2 and supply the input power to the loads Load 1 and Load 2.

According to an embodiment, the main power supply GRID may be a power grid that includes an infrastructure system for generating, transmitting, and distributing power. For example, the main power supply GRID may include a power plant, a substation, a power line network, and the like.

The sub-power supplies E1 and E2 may be provided as power supplies or systems that are different types from the main power supply GRID.

As an example, the sub-power supplies E1 and E2 may be provided as photovoltaic power generation systems. The sub-power supplies E1 and E2 may be the photovoltaic power generation systems each including a photovoltaic module and devices connected thereto. The photovoltaic module is a power generation device installed on a roof or exterior wall of a building and converts solar light into electrical energy through a photovoltaic effect. The device may be a power conditioning system (PCS) or power conversion system (PCS) that performs power conversion on power generated by the photovoltaic module. In some embodiments, the device may be a module level power electronics (MLPE). The device may be an optimizer or a micro-inverter (MI).

Optionally, the sub-power supplies E1 and E2 may each further include a coupler connected to the device. At least some of the devices may be connected to the grid-connected distribution box 1 through the coupler. For example, the coupler may combine powers output from a plurality of devices into one output power. The powers combined by the coupler may be supplied to the grid-connected distribution box 1.

As another example, the sub-power supplies E1 and E2 may be provided as energy storage systems (ESSs). The sub-power supplies E1 and E2 may store power generated by the photovoltaic module or power supplied from a power grid and may supply power to the grid-connected distribution box 1 according to the needs of the loads Load 1 and Load 2, thereby efficiently supplying power. The sub-power supplies E1 and E2 may each include a battery for storing power and a power conversion module. The power conversion module may be a PCS that performs conversion between battery-side power and opposite-side power. In this case, the PCS may include a bidirectional direct current (DC)-to-DC converter that is connected to the battery to convert a voltage, and a bidirectional inverter that connects the bidirectional DC-to-DC converter to a device outside the ESS.

The loads Load 1 and Load 2 each refer to a device that is installed in an electric power consumer such as a house, a commercial facility, or a factory and operated by receiving electric energy distributed through the grid-connected distribution box 1. That is, the loads Load 1 and Load 2 may include various types of devices, equipment, facilities, and the like that operate by receiving electric energy supplied from the main power supply GRID or the sub-power supplies E1 and E2.

The grid-connected distribution box 1 according to an embodiment of the present disclosure may be connected to a power grid that is the main power supply GRID, may be connected to a photovoltaic power generation system that is a first sub-power supply E1, and may be connected to an ESS that is a second sub-power supply E2. The grid-connected distribution box 1 may control a voltage, a current, and/or power output from or supplied to each component according to a power supply state of the main power supply GRID and/or the sub-power supplies E1 and E2.

Referring to FIGS. 1 and 2, in the grid-connected distribution box 1, a case 10 having an internal space may be provided to be opened or closed by a cover 11, and parts may be disposed in the internal space of the case 10.

The grid-connected distribution box 1 may include a grid module 100, a relay module 200, a first terminal block module 300, a second terminal block module 400, a blocking module 500, a communication module 600, and a transformer 700 inside the case 10.

The grid module 100 may be disposed inside the case 10, may be connected to the main power supply GRID, and may supply power to at least one load. The grid module 100 may receive power from the main power supply GRID and may distribute the power to at least one load. For example, the grid module 100 may supply power to a first load Load 1 and/or a second load Load 2.

The relay module 200 may be disposed at one side of the grid module 100 and may be assembled with the grid module 100. The relay module 200 may be electrically connected to the first terminal block module 300. The relay module 200 may control power supply to the grid module 100 by the first terminal block module 300. The relay module 200 may connect or disconnect a power circuit according to a control signal of the first terminal block module 300.

The first terminal block module 300 may be connected to at least one sub-power supply. For example, the first terminal block module 300 may be connected to at least one of the first sub-power supply E1 and the second sub-power supply E2 to receive power.

The sub-power supply may be provided as an emergency power supply for a generator device, a power generation system inverter, or an ESS. However, one or more embodiments are not limited thereto, and any power supply may be applied as the sub-power supply as long as the power supply may supply stable alternating current (AC) power to the first terminal block module 300.

The first terminal block module 300 may be connected to the relay module 200 and may perform control such that power supplied from the sub-power supply is transmitted to the grid module 100 through the relay module 200. By the first terminal block module 300, the grid module 100 may transmit power supplied from the sub-power supply to a load.

The second terminal block module 400 may be electrically connected to the first terminal block module 300 and may be disposed adjacent to the grid module 100. The second terminal block module 400 may be connected to a neutral line of the main power supply GRID and a neutral line of the load, thereby fixing the neutral lines.

In an embodiment, the grid module 100 may be connected to an active line of the main power supply GRID so that power may be input. The grid module 100 may be connected to active lines of the loads Load 1 and Load 2 so that power may be output. In this case, the second terminal block module 400 may be connected to a common neutral line of the main power supply GRID so that power may be input. The second terminal block module 400 may be connected to the loads Load 1 and Load 2 so that power may be output. The grid-connected distribution box 1 may receive and distribute power at a constant voltage by a phase voltage generated between the active line and the neutral line.

The blocking module 500 may include a typical circuit breaker to block a power transfer in the grid-connected distribution box 1. The blocking module 500 may be electrically connected to the first terminal block module 300, and when an abnormality occurs in power supply, the power supply may be stopped by the blocking module 500.

According to an embodiment, the blocking module 500 may be disposed on the first terminal block module 300 to overlap the first terminal block module 300. As shown in FIG. 2, the blocking module 500 may be disposed and layered on the first terminal block module 300 so that the grid-connected distribution box 1 may have a simple internal structure and a compact size.

The communication module 600 may be electrically connected to the first terminal block module 300 and may perform communication processing according to a control signal. The communication module 600 may include a switched-mode power supply (SMPS) board 610 for converting an AC current into a DC current and an interface board 620 for processing a signal between circuits.

The transformer 700 may be disposed in the internal space of the case 10. As an example, the transformer 700 may be provided as a typical autotransformer. The transformer 700 may be connected to the first terminal block module 300 and may supply split-phase power to the first load Load 1 and the second load Load 2 from the grid module 100 according to a control signal.

In this case, a heat dissipation structure (not shown) may be formed on a surface of the case 10 facing the transformer 700. The heat dissipation structure may be provided in a shape integrated with the case 10. The heat dissipation structure may be provided to externally dissipate heat generated when the transformer 700 and other internal parts operate. According to an embodiment, the communication module 600 may be disposed on the transformer 700 to overlap the transformer 700. As shown in FIG. 2, the communication module 600 may be disposed and layered on the transformer 700 so that the grid-connected distribution box 1 may have a simple internal structure and a compact size.

Optionally, the grid-connected distribution box 1 may further include a grounding module 800. The grounding module 800 may connect an electric circuit to the ground through a conducting wire and may allow a current to flow to the ground. The grounding module 800 may allow a current to flow to the ground when an abnormal voltage occurs, thereby allowing a device to maintain the same potential.

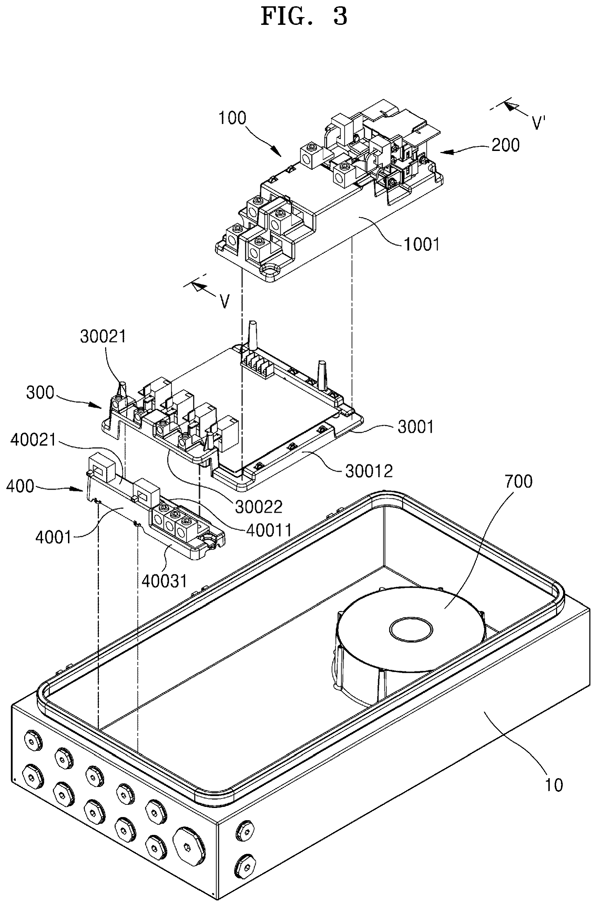

FIG. 3 is an exploded perspective view of a part of the grid-connected distribution box 1 of FIG. 2.

Referring to FIG. 3, the grid module 100, the relay module 200, the first terminal block module 300, and the second terminal block module 400 may be disposed adjacent to each other.

For convenience of description, hereinafter, in the grid-connected distribution box 1, a side at which the second terminal block module 400 is disposed is defined as a front side, and a side at which the transformer 700 is disposed is defined as a rear side.

The grid module 100 may have a first base body 1001, and the grid module 100 and the relay module 200 may be assembled so that the relay module 200 may be seated at one side of the first base body 1001.

The first base body 1001 may have a step difference. In some embodiments, the first base body 1001 may be formed in a shape extending in a longitudinal direction of the case 10 and may be disposed at a left side of the internal space of the case 10.

The first terminal block module 300 may have an approximately plate shape and may be disposed at a right side of the internal space of the case 10. The first terminal block module 300 may be disposed in parallel with the grid module 100 in a left-right direction.

The first terminal block module 300 may have a first base structure 3001 so that a first step 30021 on which at least one sub-input terminal is mounted may be formed at a front side thereof, and a grid module support 30012 adjacent to the grid module 100 may be formed at a side thereof.

The first step 30021 may be formed to protrude upward from a base surface of the first base structure 3001. A cut-out portion 30022 may be disposed below the first step 30021. The cut-out portion 30022 may form a space recessed from a front surface of the first base structure 3001. A second base structure 4001 of the second terminal block module 400 may be partially inserted into the cut-out portion 30022.

The first step 30021 may protrude from a bottom surface inside the case 10, and thus a sub-input terminal mounted on the first step 30021 may be positioned at an upper portion of the case 10. In some embodiments, when work of connecting a conducting wire to the sub-input terminal, a working position may be provided at an upper side of the case 10, and thus work convenience may be improved.

The grid module support 30012 may be provided in a block shape protruding upward from the base surface of the first base structure 3001. The grid module support 30012 may be inserted into a side surface of the first base body 1001.

According to an embodiment, facing surfaces of the first base body 1001 and the first base structure 3001 may correspond to each other. The grid module support 30012 may be inserted into a right side surface of the first base body 1001. Thus, the grid module 100 and the first terminal block module 300 may at least partially overlap each other to be installed more compactly.

The second terminal block module 400 may be formed in a shape extending in a width direction of the case 10 and may be disposed at a front side of the internal space of the case 10. The second terminal block module 400 may be disposed adjacent to the first terminal block module 300 in the front-rear direction.

The second terminal block module 400 may have the second base structure 4001, and a second step 40021 may be provided at one side of a second plate 40011 having a flat plate shape, and a neutral terminal mount 40031 may be provided at the other side of the second plate 40011.

The second step 40021 may be disposed at one side of a front surface of the second base structure 4001. The second step 40021 may be formed to protrude upward from the second plate 40011 of the second base structure 4001.

The neutral terminal mount 40031 may be disposed at the other side of the second base structure 4001. The neutral terminal mount 40031 may be provided on the second plate 40011 of the second base structure 4001.

In the second base structure 4001, a portion of a rear side of the second step 40021 may be inserted into the cut-out portion 30022 of the first base structure 3001.

According to an embodiment, facing surfaces of the first base structure 3001 and the second base structure 4001 may correspond to each other. A base portion of the second base structure 4001 may be partially inserted into the cut-out portion 30022 of the first base body 1001. Accordingly, the first terminal block module 300 and the second terminal block module 400 may at least partially overlap each other to be installed more compactly.

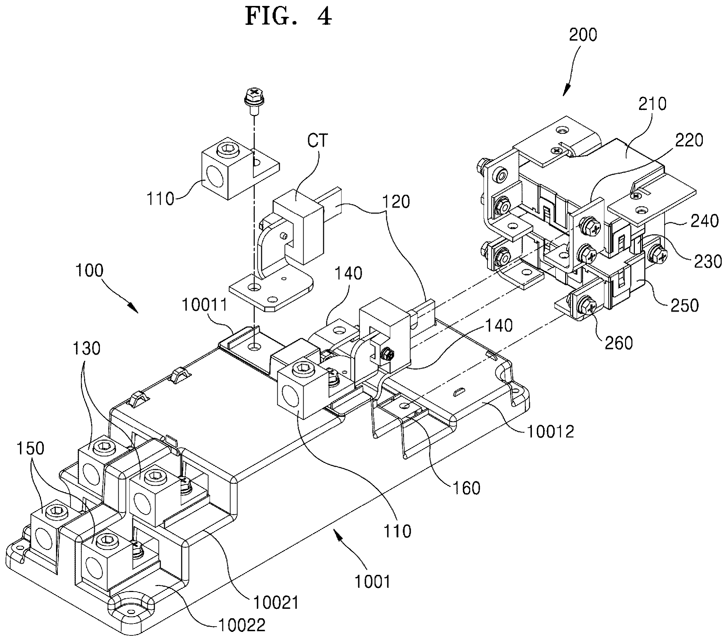

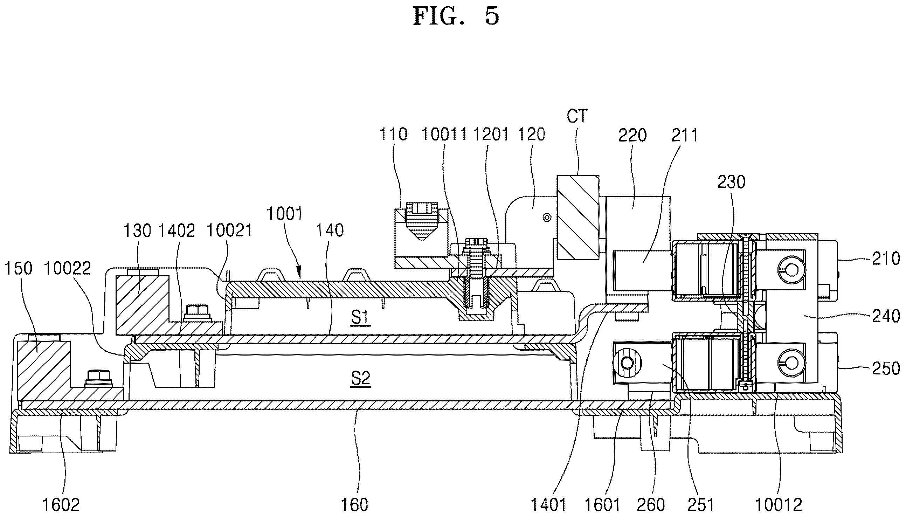

FIG. 4 is a view illustrating the grid module 100 and the relay module 200 of FIG. 3. FIG. 5 is a cross-sectional view taken along line V-V' of FIG. 3 when the grid module 100 and the relay module 200 are assembled.

Referring to FIGS. 1 to 5, the grid module 100 and the relay module 200 may be assembled to each other to form an electric circuit.

The grid module 100 may include the first base body 1001 having a step difference, and a main input terminal 110 and one or more output terminals 130 and 150 which are disposed at different levels along the step difference.

The grid module 100 may include the main input terminal 110, a main input tab 120, a first output terminal 130, a first connector 140, a second output terminal 150, and a second connector 160.

According to an embodiment, the first base body 1001 may include a main terminal mount 10011 forming an upper surface thereof, a first output terminal mount 10021 disposed below the main terminal mount 10011, and a second output terminal mount 10022 disposed below the first output terminal mount 10021.

The main input terminal 110 may be mounted on the main terminal mount 10011, the first output terminal 130 may be mounted on the first output terminal mount 10021, and the second output terminal 150 may be mounted on the second output terminal mount 10022. That is, due to a structure of the first base body 1001, the main input terminal 110, the first output terminal 130, and the second output terminal 150 may be disposed at different levels.

In another embodiment, the main input terminal 110 may be disposed on any one output terminal mount of the first output terminal mount 10021 and the second output terminal mount 10022, and the first output terminal 130 and the second output terminal 150 may be disposed on the remaining output terminal mount and the main terminal mount 10011.

The first base body 1001 may include an insulating material. Thus, the main input terminal 110, the first output terminal 130, and the second output terminal 150 installed on the first base body 1001 may form an electric circuit and prevent leakage current.

The first base body 1001 may include a heat-resistant and chemical-resistant material. Thus, the physical or chemical deformation of the first base body 1001 due to heat generated from the main input terminal 110, the first output terminal 130, and the second output terminal 150 installed on the first base body 1001 may be prevented.

The grid module 100 may form an electric circuit connected to the relay module 200 through the main input terminal 110, the main input tab 120, the first output terminal 130, the first connector 140, the second output terminal 150, and the second connector 160 installed on the first base body 1001.

The main input terminal 110 may be directly connected to the main power supply GRID so that power may be applied. The main input terminal 110 may be connected to the active line of the main power supply GRID. The main input terminal 110 may be connected to the relay module 200 through the main input tab 120.

The main input tab 120 may be disposed on the main terminal mount 10011. The main input terminal 110 may be mounted on the main input tab 120. The main input tab 120 may have one end portion connected to the main input terminal 110 and the other end portion connected to a first relay tab 220 of the relay module 200. Power input to the main input terminal 110 may be transmitted to the relay module 200 through the main input tab 120.

As a specific example, the main input terminal 110 may have a tab fixing member 1201 having a plate shape so that the tab fixing member 1201 may be disposed on the main terminal mount 10011. The main input terminal 110 may be seated on the tab fixing member 1201. In this case, the other end portion of the main input tab 120 may be formed in a shape extending from the tab fixing member 1201 toward the first relay tab 220.

The main input tab 120 may further include a current sensor CT. A current input to the main input terminal 110 may be measured at the main input tab 120 by the current sensor CT.

The first output terminal 130 may be connected to the first load Load 1 to supply power. The first output terminal 130 may be connected to the active line of the first load Load 1. The first output terminal 130 may be connected to the relay module 200 through the first connector 140.

The first connector 140 may be disposed on the first output terminal mount 10021. A first opening S1 may be formed to pass through the first output terminal mount 10021 in a longitudinal direction so that the first connector 140 may be inserted into the first opening S1. The first connector 140 may be formed in a shape extending through the first opening S1.

The first connector 140 may have one end portion connected to the first relay tab 220 of the relay module 200 and the other end portion connected to the first output terminal 130. The first connector 140 may form a circuit that connects the main input terminal 110 to the first output terminal 130 through the first relay tab 220. Accordingly, power supplied from the main power supply GRID may be distributed to the first load Load 1.

In some embodiments, the other end portion of the first connector 140 may be bent upward. The first connector 140 may have a bent end portion 1401 bent upward and a straight line end portion 1402 extending in a straight line at a side opposite to the bent end portion 1401. Due to a shape of the bent end portion 1401, the first connector 140 may be fastened to the first relay tab 220 above a bottom surface of the first output terminal mount 10021, and may have a large separation distance from the second connector 160.

The second output terminal 150 may be connected to the second load Load 2 to supply power. The second output terminal 150 may be connected to the active line of the second load Load 2. The second output terminal 150 may be connected to the relay module 200 through the second connector 160.

The second connector 160 may be disposed on the second output terminal mount 10022. A second opening S2 may be formed to pass through the second output terminal mount 10022 in a longitudinal direction so that the second connector 160 may be inserted into the second opening S2. The second connector 160 may be formed in a shape extending through the second opening S2.

The second connector 160 may have one end portion connected to a second relay tab 260 of the relay module 200 and the other end portion connected to the second output terminal 150. The second connector 160 may form a circuit connecting the relay module 200 and the second output terminal 150, thereby allowing power transmitted through the relay module 200 to be distributed to the second load Load 2.

In some embodiments, the second connector 160 may be provided as a linear terminal extending in both directions and thus may have a relay-side end portion 1601 and a load terminal-side end portion 1602. The second connector 160 may be mounted on a bottom surface of the second output terminal mount 10022 and may be installed stably.

According to an embodiment, the second connector 160 may have a different length from the first connector 140. A length of the second connector 160 may be greater than a length of the first connector 140. In this case, in the first base body 1001, a length of the second output terminal mount 10022 may be greater than a length of the first output terminal mount 10021.

Accordingly, inside the case 10, the first output terminal 130 may be disposed behind the second output terminal 150, and at a side opposite to the first output terminal 130, the relay-side end portion 1601 of the second connector 160 may be positioned behind the bent end portion 1401 of the first connector 140.

Due to a shape of the first base body 1001 and a length difference between the first connector 140 and the second connector 160, during an assembly process of the grid module 100, an operation of assembling the second output terminal 150 to the second connector 160 and an operation of assembling the first output terminal 130 to the first connector 140 may each be easily performed.

In some embodiments, during an assembly process of the grid module 100 and the relay module 200, an operation of connecting the second relay tab 260 to the relay-side end portion 1601 of the second connector 160 and an operation of connecting the first relay tab 220 to the bent end portion 1401 of the first connector 140 may each be easily performed.

The first base body 1001 of the grid module 100 may further include a relay mount 10012 protruding from a surface of the second output terminal mount 10022. The relay mount 10012 may support the relay module 200.

When the relay module 200 is assembled with the grid module 100, the relay module 200 may be seated on the relay mount 10012 so that an assembly portion with the grid module 100 may be stably supported.

When one side of the relay module 200 is assembled with the grid module 100, the other side of the relay module 200 may be connected to the first terminal block module 300. The relay module 200 may receive power from the first sub-power supply E1 or the second sub-power supply E2 connected to the first terminal block module 300.

The relay module 200 may output power input to the main input terminal 110 to the first output terminal 130 and may output power input by the first terminal block module 300 to the second output terminal 150. That is, the relay module 200 may separate a circuit that supplies power from a main power supply to a load from a circuit that supplies power from a sub-power supply to a load.

The relay module 200 may include a first relay 210, the first relay tab 220, a spacer 230, a connection tab 240, a second relay 250, and the second relay tab 260.

The relay module 200 may include the first relay 210 and the second relay 250 that are vertically stacked. In the relay module 200, the first relay 210 may be connected to the first relay tab 220 to form an electric circuit, and the second relay 250 may be connected to the second relay tab 260 to form an electric circuit.

According to an embodiment, the first relay 210 may assemble the first relay tab 220 to a first relay tab supporter 211. The first relay tab 220 may connect the main input tab 120 and the first connector 140 of the grid module 100 to each other to form a power supply circuit of the main power supply GRID.

In this case, the second relay 250 may assemble the second relay tab 260 to a second relay tab supporter 251. The second relay tab 260 may be connected to the second connector 160 of the grid module 100 to form a power supply circuit for power of the first sub-power supply E1 or the second sub-power supply E2 transmitted from the first terminal block module 300 to the relay module 200.

The connection tab 240 may have a shape vertically extending to connect the first relay 210 to the second relay 250. In this case, the spacer 230 may be disposed between the first relay 210 and the second relay 250 to support the first relay 210 and the second relay 250 and maintain a separation space.

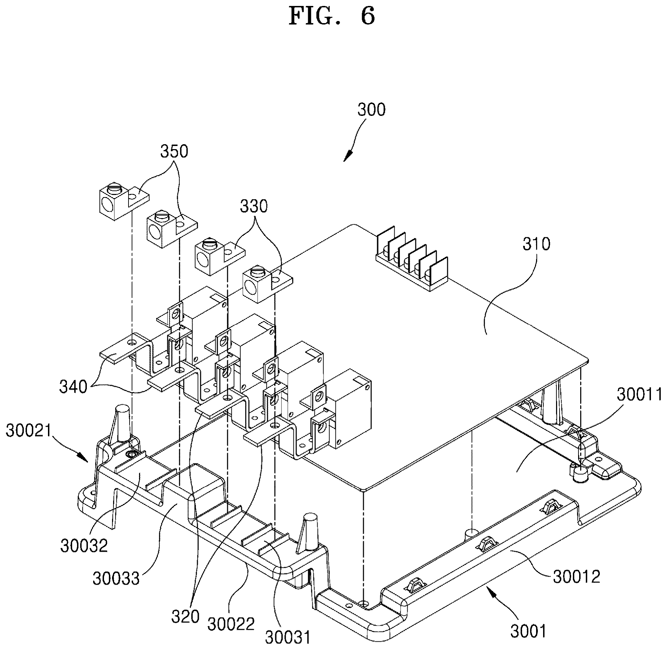

FIG. 6 is a view illustrating the first terminal block module 300 of FIG. 3.

Referring to FIGS. 1 and 6, the first terminal block module 300 may include the first base structure 3001, and a control board 310, a first sub-input tab 320, a first sub-input terminal 330, a second sub-input tab 340, and a second sub-input terminal 350 which are disposed on the first base structure 3001.

The first base structure 3001 may include an insulating material. Thus, the control board 310, the first sub-input terminal 330, and the second sub-input terminal 350 installed on the first base structure 3001 may form an electric circuit and prevent leakage current.

The first base structure 3001 may include a heat-resistant and chemical-resistant material. Thus, the physical or chemical deformation of the first base structure 3001 due to heat generated from the control board 310, the first sub-input terminal 330, and the second sub-input terminal 350 installed on the first base structure 3001 may be prevented.

According to an embodiment, the first base structure 3001 may include a first plate 30011, the grid module support 30012, and the first step 30021. The first base structure 3001 may have a step difference so that the control board 310 and the first and second sub-input terminals 330 and 350 may be positioned at different levels and disposed not to overlap each other.

The cut-out portion 30022 of the first step 30021 and the grid module support 30012 have been described with reference to FIG. 3, and thus descriptions thereof will be omitted below.

The first plate 30011 may have a flat plate shape, and the control board 310 may be disposed on the first plate 30011.

The control board 310 may be provided as a circuit board that generates an electrical signal for controlling the grid-connected distribution box 1. The control board 310 may generate control signals for the grid module 100, the relay module 200, the first terminal block module 300, the second terminal block module 400, the blocking module 500, the communication module 600, and the transformer 700.

For example, the control board 310 may measure input sub-power at the first sub-input terminal 330 and the second sub-input terminal 350. In some embodiments, the control board 310 may control the relay module 200 to switch a power supply circuit, thereby controlling power transmitted to a load. In some embodiments, the control board 310 may control the blocking module 500 to block a current when an abnormality occurs in the current input to or output from the grid module 100 and the second terminal block module 400. In some embodiments, the control board 310 may control the transformer 700 to transform a current input to or output from the grid-connected distribution box 1.

The first step 30021 may protrude from one side of the first plate 30011 in a height direction and may support the first sub-input terminal 330 and the second sub-input terminal 350. In some embodiments, the first step 30021 may have a first sub-terminal mount 30031 and a second sub-terminal mount 30032.

The first sub-input terminal 330 may be disposed on the first sub-terminal mount 30031, and the second sub-input terminal 350 may be disposed on the second sub-terminal mount 30032.

A protruding block 30033 may be disposed between the first sub-terminal mount 30031 and the second sub-terminal mount 30032. The protruding block 30033 may be formed to protrude from a surface of the first step 30021.

The protruding block 30033 may define the first sub-terminal mount 30031 and the second sub-terminal mount 30032. The first sub-input terminal 330 and the second sub-input terminal 350 may be supported on the first step 30021 by the protruding block 30033 and fixed in place. In some embodiments, the first sub-input terminal 330 and the second sub-input terminal 350 may be separated by the protruding block 30033 so that interference between circuits may be prevented.

According to an embodiment, power may be input to the first terminal block module 300 through the first sub-input tab 320, the first sub-input terminal 330, the second sub-input tab 340, and the second sub-input terminal 350.

The first sub-input terminal 330 may be connected to the first sub-power supply E1 so that power may be applied. The first sub-input terminal 330 may be connected to an active line of the first sub-power supply E1. The first sub-input terminal 330 may be installed on the first sub-input tab 320.

The first sub-input tab 320 may be disposed on the first sub-terminal mount 30031. The first sub-input tab 320 may have one end portion connected to the first sub-input terminal 330 and the other end portion connected to the control board 310. In some embodiments, the first sub-input tab 320 may be connected to the relay module 200 through a conducting wire and may form a circuit for power transmitted to the relay module 200 under the control of the control board 310.

The second sub-input terminal 350 may be connected to the second sub-power supply E2 so that power may be applied. The second sub-input terminal 350 may be connected to an active line of the second sub-power supply E2. The second sub-input terminal 350 may be installed on the second sub-input tab 340.

The second sub-input tab 340 may be disposed on the second sub-terminal mount 30032. The second sub-input tab 340 may have one end portion connected to the second sub-input terminal 350 and the other end portion connected to the control board 310. In some embodiments, the second sub-input tab 340 may be connected to the relay module 200 through a conducting wire and may form a circuit for power transmitted to the relay module 200 under the control of the control board 310.

According to an embodiment, the first sub-input tab 320 and the second sub-input tab 340 may be bent upward. The first sub-input tab 320 and the second sub-input tab 340 may be bent to correspond to a step difference between the first plate 30011 and the first step 30021. That is, the first sub-input tab 320 and the second sub-input tab 340 may be bent along a shape of the first step 30021 so that one end portions thereof may be disposed on the first step 30021, and the other end portions thereof may be disposed on the control board 310.

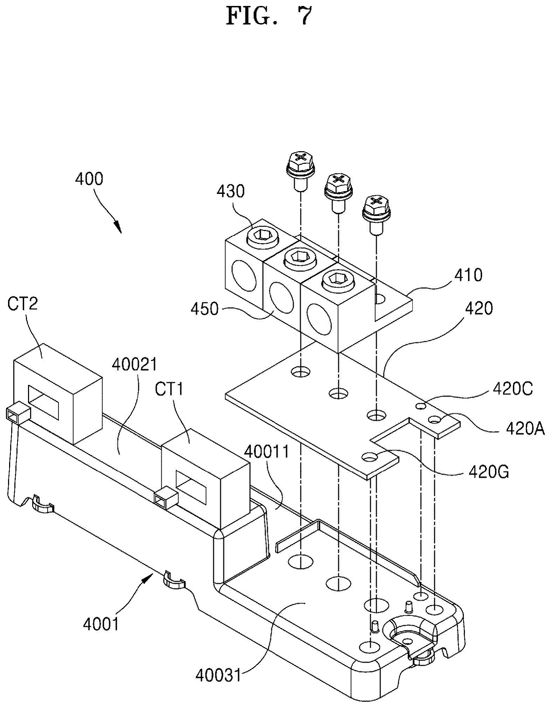

FIG. 7 is a view illustrating the second terminal block module 400 of FIG. 3.

Referring to FIGS. 1 and 7, the second terminal block module 400 may include the second base structure 4001, and a neutral input terminal 410, a neutral connection tab 420, a first neutral output terminal 430, and a second neutral output terminal 450 which are disposed on the second base structure 4001.

The second terminal block module 400 may be disposed adjacent to the first terminal block module 300 and may have the neutral input terminal 410 connected to the main power supply GRID and one or more neutral output terminals 430 and 450 connected to one or more loads.

The second base structure 4001 may include an insulating material. Thus, the neutral input terminal 410, the first neutral output terminal 430, and the second neutral output terminal 450 installed on the second base structure 4001 may form an electric circuit and prevent leakage current.

The second base structure 4001 may include a heat-resistant and chemical-resistant material. Thus, the physical or chemical deformation of the second base structure 4001 due to heat generated from the neutral input terminal 410, the first neutral output terminal 430, and the second neutral output terminal 450 installed on the second base structure 4001 may be prevented.

According to an embodiment, the second base structure 4001 may include the second plate 40011, the second step 40021, and the neutral terminal mount 40031.

The second plate 40011 may have a flat plate shape extending in a left-right direction and may be partially inserted into the cut-out portion 30022 of the first terminal block module 300.

The second step 40021 and the neutral terminal mount 40031 may be laterally disposed in parallel on the second plate 40011. In this case, a width of the neutral terminal mount 40031 may be less than a width of the second step 40021.

The second step 40021 may be formed by a portion of a surface of the second plate 40011 protruding in a height direction. The second step 40021 may support at least one current sensor. For example, a first current sensor CT1 and a second current sensor CT2 may be disposed on the second step 40021.

The first current sensor CT1 and the second current sensor CT2 may each be provided as the same sensor as the above-described current sensor CT installed on the main input tab 120. However, it will be described that the current sensor CT, the first current sensor CT1, and the second current sensor CT2 are referred to differently for the purpose of distinction.

The neutral terminal mount 40031 may have a flat plate shape extending from the second plate 40011, thereby forming a space in which the neutral connection tab 420 is mounted.

The neutral connection tab 420 may be provided as a plate-shaped terminal having an area corresponding to the neutral terminal mount 40031, and the neutral input terminal 410, the first neutral output terminal 430, and the second neutral output terminal 450 may be mounted on the neutral connection tab 420.

The neutral input terminal 410 may be connected to the neutral line of the main power supply GRID so that a neutral line current may be input. The first neutral output terminal 430 may be connected to the active line of the first load Load 1, and the second neutral output terminal 450 may be connected to the active line of the second load Load 2 so that a neutral line current may be output to each load.

The neutral input terminal 410, the first neutral output terminal 430, and the second neutral output terminal 450 may be connected to each other through the neutral connection tab 420, thereby forming a circuit, though which a neutral line current flows, in the second terminal block module 400. Accordingly, a neutral current supplied from the main power supply GRID may be distributed to the first load Load 1 and the second load Load 2.

According to an embodiment, an edge of the neutral connection tab 420 may include a controller connection portion 420C, a transformer connection portion 420A, and a ground connection portion 420G.

The controller connection portion 420C may be connected to the control board 310 of the first terminal block module 300, and thus an input or output of a neutral line current in the second terminal block module 400 may be controlled. The transformer connection portion 420A may be connected to the transformer 700 so that a voltage of a neutral line current may be transformed. The ground connection portion 420G may be connected to the grounding module 800, thereby allowing a neutral line current to flow to the ground.

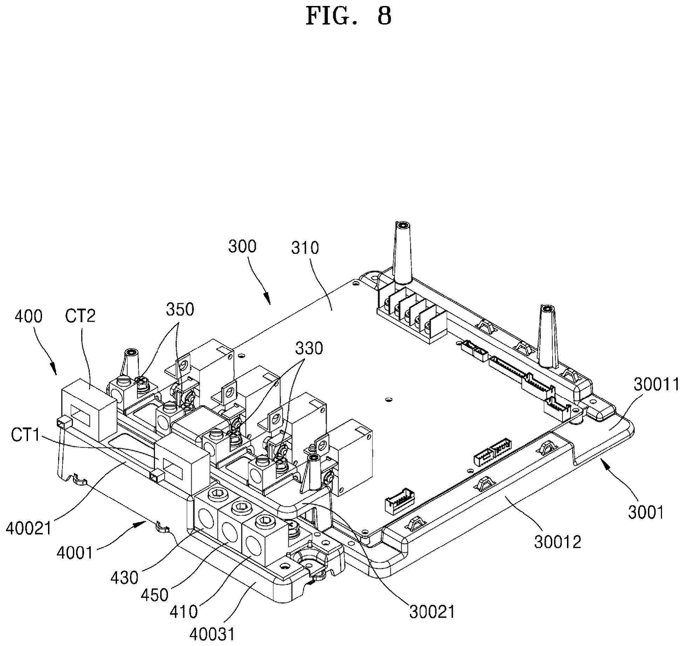

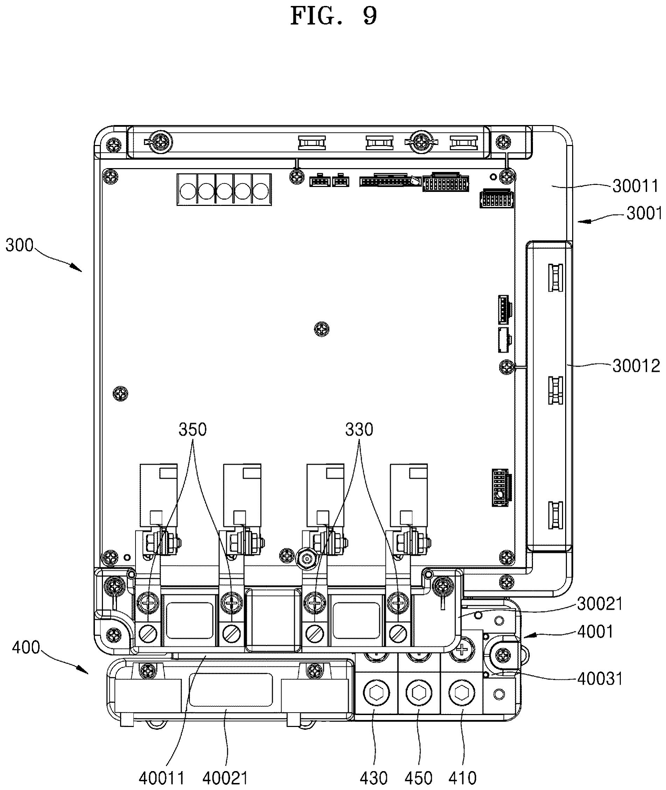

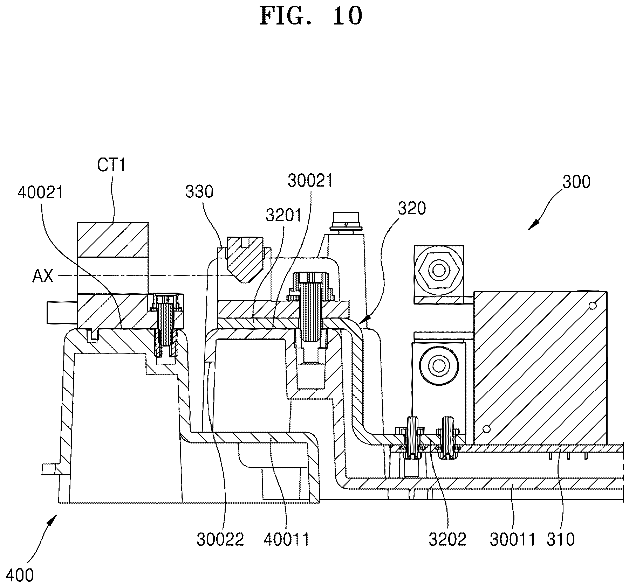

FIG. 8 is a view illustrating a state in which the first terminal block module 300 and the second terminal block module 400 are assembled. FIG. 9 is a view illustrating the first terminal block module 300 and the second terminal block module 400 of FIG. 8 viewed from above. FIG. 10 is a view illustrating a cross section taken based on a mounting portion of the first sub-input terminal 330 of the first terminal block module 300 and the first current sensor CT1 of the second terminal block module 400 of FIG. 8.

The following description may be equally applied to a mounting portion of the second current sensor CT2 adjacent to the second sub-input terminal 350.

Referring to FIGS. 1 and 8 to 10, the first base structure 3001 of the first terminal block module 300 and the second base structure 4001 of the second terminal block module 400 may partially overlap each other to be disposed close to each other by.

According to an embodiment, a width of the first step 30021 may be less than a width of the second base structure 4001. Accordingly, a portion of the second plate 40011 may be inserted into the cut-out portion 30022.

When the second plate 40011 is inserted into the cut-out portion 30022, the second step 40021 may be disposed to face the first step 30021, and the neutral terminal mount 40031 may be partially disposed below the first step 30021.

In some embodiments, the neutral terminal mount 40031 may be disposed such that a portion thereof is disposed below the first step 30021, and the other portion thereof is exposed. A portion of the neutral terminal mount 40031 on which the first neutral output terminal 430 and the second neutral output terminal 450 are mounted may be disposed below the first step 30021 to overlap the first step 30021. An upper portion of a portion of the neutral input terminal 410 on which the neutral terminal mount 40031 is mounted may be exposed without overlapping the first step 30021.

The neutral input terminal 410, the first neutral output terminal 430, and the second neutral output terminal 450 disposed on the neutral terminal mount 40031 may be disposed in a stacked structure at different levels from the first sub-input terminal 330 and the second sub-input terminal 350 disposed on the first step 30021.

Accordingly, in the grid-connected distribution box 1 according to an embodiment of the present disclosure, the first terminal block module 300 and the second terminal block module 400 may be disposed to partially overlap each other, thereby improving space utilization inside the case 10, increasing a degree of freedom in internal design, and further reducing an overall size of a distribution box.

In some embodiments, the first and second sub-input terminals 330 and 340 mounted on the first terminal block module 300 and the neutral input terminal 410, the first neutral output terminal 430, and the second neutral output terminal 450 mounted on the second terminal block module 400 are disposed at different positions, and thus it is easy for a user to distinguish respective terminals.

For example, the first current sensor CT1 disposed on the second step 40021 may be disposed to face the first sub-input terminal 330 disposed on the first step 30021, and the second current sensor CT2 may be disposed to face the second sub-input terminal 350.

As shown in FIG. 10, the first current sensor CT1 and the first sub-input terminal 330 may be installed on a straight line along a first axis AX. A conducting wire connected from the first sub-power supply E1 to the first sub-input terminal 330 may pass through the first current sensor CT1 to be connected to the first sub-input terminal 330. Power supplied from the first sub-power supply E1 may be measured by the first current sensor CT1. When a current sensed by the first current sensor CT1 is normal, power supplied from the first sub-power supply E1 may be input to the first sub-input terminal 330. When the first current sensor CT1 detects an abnormality such as an overcurrent, a current to the first sub-input terminal 330 may be blocked.

As described above, when power is normally input to the first sub-input terminal 330, power may be transmitted to the control board 310 connected to a control board-side end portion 3202 through a terminal-side end portion 3201 of the first sub-input tab 320.

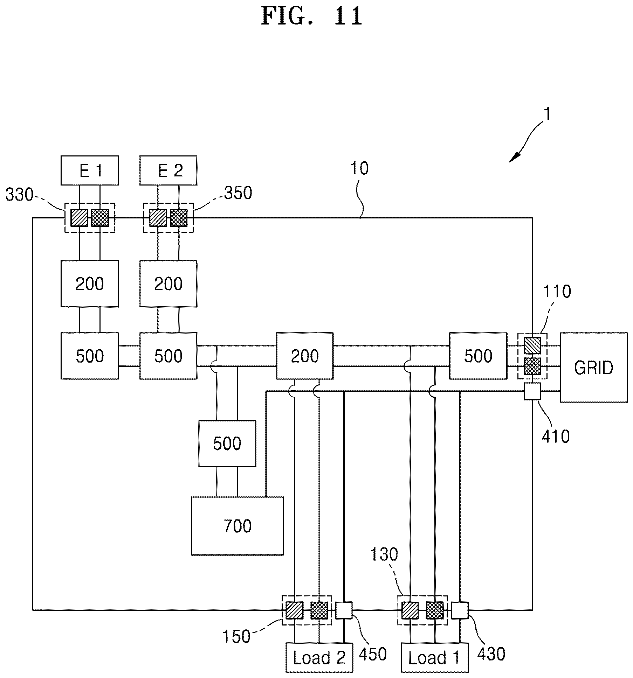

FIG. 11 is a schematic diagram illustrating a circuit of the grid-connected distribution box 1 of FIG. 2. Referring to FIGS. 1 to 11, the grid-connected distribution box 1 may be connected to a plurality of power supplies and may mutually interchange power supplied to a plurality of loads.

In the grid-connected distribution box 1 according to an embodiment of the present disclosure, a circuit for supplying main power applied from the main power supply GRID to the first load Load 1 and a circuit for supplying sub-power applied from the first sub-power supply E1 or the second sub-power supply E2 to the second load Load 2 may be provided to be separated from each other.

In this case, the grid-connected distribution box 1 may include a plurality of current sensors (not shown) to sense errors in the circuits. The control board 310 of the first terminal block module 300 may control the blocking module 500 according to a result sensed by the current sensor, thereby blocking a circuit section in which a problem has occurred.

According to an embodiment, main power supplied from the main power supply GRID may be input to the grid module 100 and the second terminal block module 400. In some embodiments, the active line of the main power supply GRID may be connected to the main input terminal 110, and the common neutral line of the main power supply GRID may be connected to the neutral input terminal 410.

As described above with reference to FIG. 7, the second terminal block module 400 may independently include a circuit that supplies, to a load, power applied through the neutral line of the main power supply GRID. For example, power applied to the common neutral line of the main power supply GRID may be input to the neutral input terminal 410 and output to the first neutral output terminal 430 and may be supplied to the first load Load 1 or output to the second neutral output terminal 450 to be supplied to the second load Load 2. Therefore, the description of a neutral line circuit of the second terminal block module 400 will be omitted below.

The grid-connected distribution box 1 may include a power supply circuit through which main power input to the main input terminal 110 is output to the first output terminal 130. Power may be supplied to the first load Load 1 through a circuit connected from the main input terminal 110 to the first output terminal 130.

According to an embodiment, sub-power supplied from the first sub-power supply E1 and the second sub-power supply E2 may be input to the first terminal block module 300. In some embodiments, the active line of the first sub-power supply E1 may be connected to the first sub-input terminal 330, and the active line of the second sub-power supply E2 may be connected to the second sub-input terminal 350.

The grid-connected distribution box 1 may include a power supply circuit through which sub-power input to the first sub-input terminal 330 is output to the second output terminal 150 through the relay module 200. Power may be supplied to the second load Load 2 through a circuit connected from the first sub-input terminal 330 to the second output terminal 150.

The grid-connected distribution box 1 may be equipped with a power supply circuit in which sub-power input to the second sub-input terminal 350 is output to the second output terminal 150 through the relay module 200. Power may be supplied to the second load Load 2 through a circuit connected from the second sub-input terminal 350 to the second output terminal 150.

Accordingly, in the grid-connected distribution box 1, the relay module 200 may be electrically connected to at least one of the first sub-power supply E1 and the second sub-power supply E2 to supply power to the second load Load 2. Accordingly, the grid-connected distribution box 1 may stably supply power to the second load Load 2 and prevent a power outage.

According to another embodiment, the grid-connected distribution box 1 may further include a power supply circuit through which main power input to the main input terminal 110 is output to the second output terminal 150 through the relay module 200. That is, the second load Load 2 may receive power input from the main power supply GRID or may receive power input from the first sub-power supply E1 and the second sub-power supply E2.

Accordingly, when a power outage occurs due to an abnormality in power of the main power GRID that is constantly supplied, the grid-connected distribution box 1 may stably supply power to the second load Load 2 through the first sub-power supply E1 and the second sub-power supply E2 and may prevent a power outage.

The present disclosure has been described with reference to embodiments shown in the accompanying drawings, but this is merely illustrative, and those skilled in the art will understand that various modifications and other equivalent embodiments are possible therefrom. Therefore, the true scope of the present disclosure should be determined only by the appended claims.

A grid-connected distribution box according to an embodiment of the present disclosure may include a structure in which terminals are disposed at an upper portion of an enclosure, thereby facilitating work of connecting electric wire.

In a grid-connected distribution box according to an embodiment of the present disclosure, when a problem occurs in a specific terminal, a corresponding module may be separated and partially replaced, thereby improving economic feasibility.

In a grid-connected distribution box according to an embodiment of the present disclosure, components constituting a distribution panel may be modularized according to functions thereof, thereby reducing a manufacturing time and improving efficiency and cost competitiveness.

A grid-connected distribution box according to an embodiment of the present disclosure may be connected to a plurality of power grids, and when an abnormality occurs in one grid, a power supply path may be switched to supply stable power to important loads, thereby reducing the possibility of a power outage and improving supply reliability.

## Claims

1. A grid-connected distribution box comprising:
a case having an internal space;
a first terminal block module disposed in the internal space and having a control board configured to control power distribution and a sub-input terminal connected to at least one sub-power supply; and
a second terminal block module disposed to partially overlap the first terminal block module and having a neutral terminal connected to a neutral line.

2. The grid-connected distribution box of claim 1, wherein a portion of the second terminal block module is inserted into a cut-out portion of the first terminal block module.

3. The grid-connected distribution box of claim 1, wherein the sub-input terminal and the neutral terminal are positioned at different levels and are disposed to at least partially overlap each other in a height direction.

4. The grid-connected distribution box of claim 1, wherein the first terminal block module comprises:
a first plate on which the control board is disposed; and
a first step protruding from one side of the first plate in a height direction and having an upper surface on which at least one sub-input terminal is disposed.

5. The grid-connected distribution box of claim 4, further comprising a sub-input tab which has one end portion disposed on the first plate and another end portion disposed on the first step to connect the control board to the at least one sub-input terminal.

6. The grid-connected distribution box of claim 5, wherein the at least one sub-input tab is bent to correspond to a step difference between the first plate and the first step.

7. The grid-connected distribution box of claim 4, wherein a first sub-input terminal to which power of a first sub-power supply is input and a second sub-input terminal to which power of a second sub-power supply is input are disposed on the first step.

8. The grid-connected distribution box of claim 7, wherein the first step comprises a protruding block protruding between the first sub-input terminal and the second sub-input terminal.

9. The grid-connected distribution box of claim 1, wherein the second terminal block module comprises:
a second plate inserted into a lower space of a first step of the first terminal block module; and
a second step which protrudes from the second plate in a height direction and is disposed to face the first step and on which a current sensor is disposed.

10. The grid-connected distribution box of claim 9, further comprising a neutral terminal mount, on which the neutral terminal is mounted, at one side of the second plate.

11. The grid-connected distribution box of claim 10, wherein a width of the neutral terminal mount is less than a width of the second step.

12. The grid-connected distribution box of claim 10, wherein a portion of the neutral terminal mount is disposed below the first step of the first terminal block module, and
another portion of the neutral terminal mount is disposed such that an input terminal of the neutral terminal is exposed.

13. The grid-connected distribution box of claim 9, wherein the current sensor is disposed to face the sub-input terminal.

14. The grid-connected distribution box of claim 1, further comprising:
a grid module disposed in the internal space and having a main input terminal to which main power is input, and at least one output terminal connected to at least one load; and
a relay module disposed at one side of the grid module.

15. The grid-connected distribution box of claim 14, wherein the grid module comprises:
a main terminal mount on which the main input terminal is mounted;
a first output terminal mount which is disposed below the main terminal mount and on which a first output terminal connected to a first load is mounted; and
a second output terminal mount which is disposed below the first output terminal mount and on which a second output terminal connected to a second load is mounted.
